# EUROPEAN PATENT SPECIFICATION

(11) **EP 3 059 069 B1**
(45) Date of publication and mention of the grant of the patent: **01.01.2020**
(21) Application number: 16382065.7
(22) Date of filing: 17.02.2016
(51) Int. Cl.: B29C 49/06, B29C 49/12, B29C 49/42

(54) **A METHOD FOR MANUFACTURING BENT-NECK BOTTLES, AND A MACHINE FOR IMPLEMENTING SAID METHOD**
VERFAHREN ZUR HERSTELLUNG VON FLASCHEN MIT GEBOGENEM HALS UND MASCHINE ZUR DURCHFÜHRUNG DES VERFAHRENS
PROCÉDÉ DE FABRICATION DE BOUTEILLES À GOULOT RECOURBÉ ET MACHINE POUR LA MISE EN OEUVRE DE CE PROCÉDÉ

(30) Priority: 18.02.2015 ES 201530195
(43) Date of publication of application: 24.08.2016
(73) Proprietor: Meccanoplastica Iberica Pet Division, S.L., 08520 Les Franqueses del Valles (ES)
(72) Inventor: VILLA LUNA, Rafael, 08520 Les Franqueses del Vallés (ES)
(74) Representative: Espiell Volart, Eduardo Maria

(56) References cited:
- JP-A- H0 286 424
- JP-A- 2005 007 786
- JP-A- 2009 241 429
- US-B2- 6 692 682

## Description

### Object of the invention

The invention, as stated in the title of the present specification, relates to a method for manufacturing bent-neck bottles and to a machine for implementing said method.

The object of the present invention specifically falls within methods for manufacturing a container in the shape of a bottle, the neck of which is inclined with respect to the longitudinal axis of the body of the same, and that, being made of a plastic material, preferably polyethene terephthalate which is commonly known as PET, and which is obtained via a stretch blow moulding manufacturing process using a preform, has the special innovative feature that it includes the implementation of a prior action on said preform in order to offset the axis of the neck via a pre-mould that enables the stretch rod to be inserted, thus enabling said type of bottle with said material and said type of manufacturing process to be obtained, which is currently unknown in the state of the art.

### Field of application of the invention

The field of application of the present invention falls within the sector of the industry that manufactures plastic containers and bottles, which encompasses, on the one hand, bent-neck bottles and, on the other hand, the stretch blow moulding manufacturing processes using an injected preform.

### Background of the invention

As is well-known, the stretch blow moulding (SBM) manufacturing processes using a preform are a very commonly used type of process in the industry for obtaining plastic containers.

In said process, an initial injected piece, referred to as a preform, is used in which the neck of the bottle is perfectly defined and is not subjected to any alterations, but in which the rest determines the material to be transformed, according to the different intended shapes and geometries, in order to shape the body of the bottle through stretch blow moulding.

In order to do so, once the preform has been heated, it is placed inside the mould and the process includes the following phases:
- Stretching. A mechanical process that consists of stretching the body of the preform due to the action of a rod along the length of the axis thereof and that is inserted in said body to coincide with said axis.
- Pre-blowing. Blowing pressurised air (usually between 1 and 10 bar) through the mouth of the preform.
- Blowing. High pressure blowing (with a maximum of 40 bar) through the mouth of the preform in order to definitively shape it.

It is important to note that, both in the pre-blowing phase and the blowing phase, obtaining the correct shape is determined by the correct position of the stretching rod through the trajectory thereof since, in order for the material to be distributed evenly, it is very important that the incidence of said stretching rod coincides with the injection point thereof that is no other than that which is located at the opposite end of the mouth or open end of the cylindrical body that makes up said preform.

Furthermore, it must be noted that a number of different models, types and shapes of bottle containers are known in the market, among them being those that have an inclined mouth with respect to the body of the same, which may be applied to many uses. However, none of said containers, in the current state of the art, is made by stretch blow moulding (SBM) manufacturing, which is a method that, nevertheless, provides improvements in the mechanical characteristics of the container and also enables the weight thereof to be reduced. Moreover, similarly to the other type of containers, due to the advantages provided by blowing preforms with respect to extrusion and blowing (container quality, profitability of the process, etc.) there is a demand in the market for this type of containers.

Indeed, until now, it was possible to obtain containers with inclined necks using extrusion and blowing machines, but this process does not enable PET to be used since this material cannot be stably processed with this technology nor does it enable the bi-orientation typical of the stretch blow moulding process.

In documents JPH0286424 and JP2005007786 it is shown a method for making bent-neck containers which comprise the introduction of a rod in a preform and the bending of the neck of the preform whilst changing the overall lenght (stretching). In JP2009241429 another method is shown where the preform enters the cavity of the mold from a corner, and the rod is set at an offset angle from the preform.

Therefore, with regards to the current state of the art, the applicant at least is unaware of any method and machine for manufacturing bent-neck bottles that have technical, structural and constituent characteristics similar to those claimed herein, the characterising details that define said bottle, process and machine being conveniently described in the final claims included in the present specification.

In this regard, it must be noted that, although the existence of a machine that is marketed as suitable for obtaining bent-neck bottles using PET preforms is known, there are no innovative and specific elements to resolve the problem set forth above regarding this type of bottles, and the stretching of said preform occurs with an angular offset with respect to the neck of the preform, thus meaning that the incidence of the stretching rod occurs on a side of the body of the preform, rather than at the injection point. Therefore, this means that neither the container obtained nor the process stability are acceptable.

### Description of the invention

The invention proposes a method for manufacturing bent-neck bottles, more specifically, plastic bottles, preferably PET (polyethene terephthalate), the neck of which is inclined with respect to the body thereof, which, consisting in a stretch blow moulding process using a standard preform, comprises the following phases:
- In a known manner, a prior injection moulding phase in which the preform is created, consisting in a cylindrical body with an open end and another closed end, and in which the neck of the bottle, at the open end of the preform, is already defined and is not subjected to any alterations.
- In an innovative manner, a folding process of the preform in which, via the insertion thereof in a pre-mould with a suitable mechanism, an angular offset is carried out between the axis of the neck of the preform and the axis of the body thereof.
- After the folding process of the preform and the heating thereof, it is placed inside the mould and the process includes the remaining conventional phases of stretching, where the axis of the body of the preform coincides with the stretching rod, being obliquely inserted through the already inclined neck, and of pre-blowing and blowing until it has been provided with its definitive shape.

Lastly, a last aspect of the invention relates to the machine for implementing the described manufacturing method of the bottle, which, consisting of a conventional machine for stretch blow moulding processes using a standard preform, which essentially includes at least one blow mould that definitively shapes the bottle and at least one stretching rod connected to an insertion mechanism for the insertion thereof into the preform placed in the aforementioned mould and through which pressurised air is blown, is differentiated due to the fact it innovatively incorporates a pre-moulding unit with a mechanism equipped to fold preforms, which consist of a cylindrical body with an open end and the other closed end, said open end being the neck of the bottle to be shaped, in such a way that an angular offset is carried out between the axis of the neck and the axis of the body of the preform.

As such, the present invention ultimately proposes:
- the manufacturing method that enables bent-neck bottles manufactured from plastic material, particularly from PET, to be obtained via a stretch blow moulding process using a preform, consisting of a standard piece, and in which, as well as the conventional phases of this type of process, it innovatively includes the prior folding of the preform to achieve the angular inclination of the neck before the insertion thereof into the mould, in such a way that the body of the bottle to be obtained is oriented with the stretch axis of the stretching rod; and
- the machine for implementing said method, i.e., to obtain said prior folding of the preform, which is differentiated by having an installed pre-mould prior to the blowing that, via the corresponding thermal and/or mechanical mechanism, manipulates the preform in order to fold it in the neck area and orient the axis of the body thereof according to the axis of the stretching rod.

### Description of the drawings

To complement the present description, and for the purpose of helping to make the characteristics of the invention more readily understandable, the present specification is accompanied by a set of drawings, constituting an integral part thereof, which by way of illustration and not limitation represent the following:
Figure 1 shows a schematic and elevation view of an example of the type of bottle to be obtained, according to the method, object of the invention, in which the bent neck thereof may be seen with respect to body thereof, the bottle having been represented upside down.
Figure 2 shows an elevation view of a conventional preform from which the containers are obtained through stretch blow moulding using a preform, in which the configuration thereof with a cylindrical body with an open end, which determines the neck of the bottle, and the other closed end that determines the bottle itself may be seen;
Figure 3 shows an elevation view of the preform once it has been subjected to the folding phase in the pre-mould, according to the method of the invention, in which the inclination of the open end thereof with respect to the rest of the preform itself may be seen; and
Figure 4 shows a schematic and cross-sectional view of an exemplary embodiment of a portion of the machine to carry out the manufacturing method of the bottle of the invention, in which the technical characteristics and essential elements it comprises, as well as the configuration and arrangement thereof, may be seen.

### Preferred embodiment of the invention

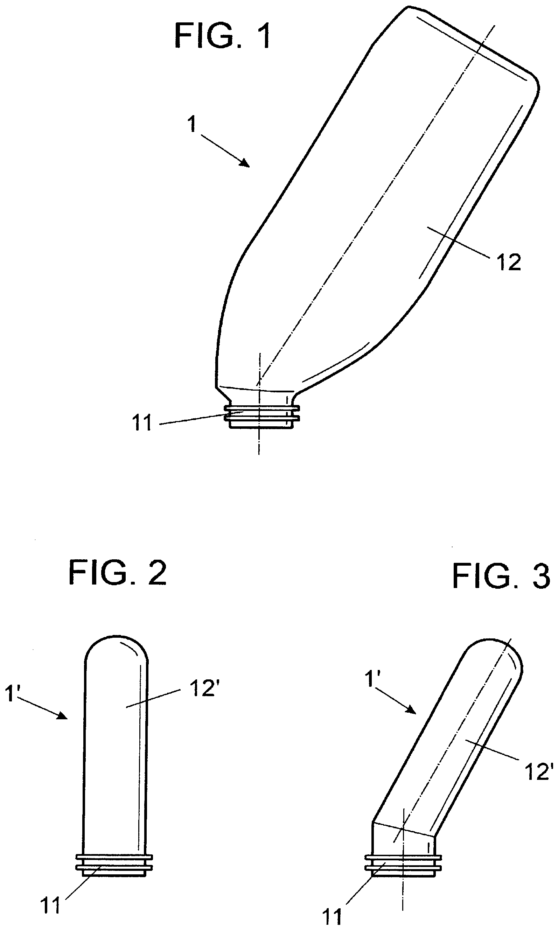

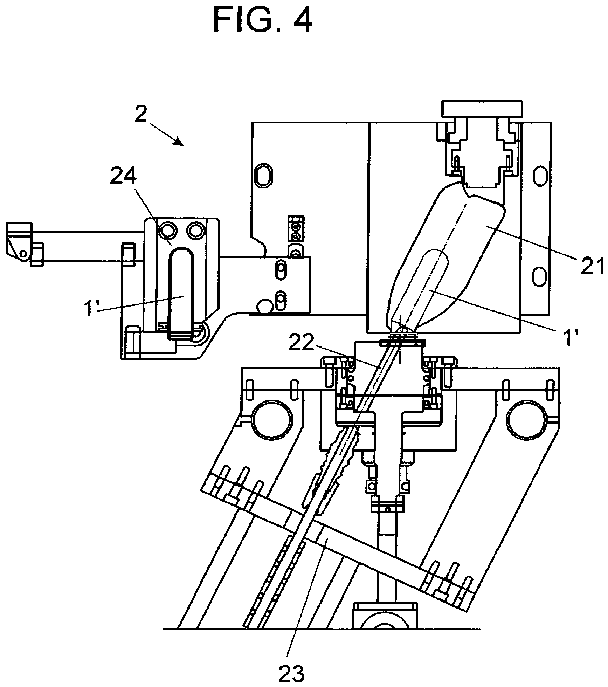

In light of the aforementioned figures, and in accordance with the numbering used, an example of the bottle (1) to be obtained (figure 1), the preform (1') (figure 2) from which said bottle (1) is obtained in the stretch blow moulding manufacturing process thereof, the folding carried out on said preform, and the machine (2) (figure 4) with which the manufacturing process is carried out may be seen.

Specifically, and as may be seen in figure 1, the bottle (1) in question is a bottle in which the axis of the neck (11) is inclined with respect to the longitudinal axis of the body (12) thereof and where said bottle (1) is manufactured from a plastic material, preferably PET (polyethene terephthalate), in a stretch blow moulding process using a preform (1').

Figures 2 and 3 show how the preform (1') used to manufacture the bottle (1) using stretch blow moulding consists of a standard piece with a cylindrical body (12') with one open end where the neck (11) is already defined and the other closed end, normally spherical in shape (figure 2) where the injection point is located in order to obtain the same. Thus, this piece, which is preferably a standard piece, is not a specific piece, after being subjected to the folding phase before being inserted into the mould (21) of the machine (2), said preform (1'), according to the recommended method, passes through a phase in which it is manipulated in order to fold it, thus carrying out an angular offset between the axis of the neck (11) and the axis of the cylindrical body (12') thereof (figure 3).

Lastly, figure 4 shows a non-limiting example of the machine (2) for manufacturing the bottle, according to the method of the invention, which consists of a machine for stretch blow moulding processes using a preform (1'), which essentially includes at least one mould (21) for blowing which provides the definitive shape of the bottle and at least one stretching rod (22) connected to an insertion mechanism (23) for the insertion thereof into the preform (1') once placed in the aforementioned mould (21) and through which pressurised air is blown.

Based on the already known said configuration, the machine (2) is differentiated by the fact that it also incorporates a pre-mould (24) to receive the preform (1') in which a folding mechanism is included that carries out the angular offset between the axis of the neck (11) and the axis of the body (12') of the preform (1'). Said angular offset is the amount necessary in order to insert the rod (22) through the neck (11) and be oriented with the body (12') of the preform (1').

Said mechanism, by way of non-limiting example, may consist of a thermal and mechanical system that, having fastening means in order to fasten the neck (11) of the preform (1'), heats a portion close to the same and, via another mechanical rotation element, moves the body (12') of the preform secured to another element of the pre-mould, inclining it as needed until the expected angle has been reached.

As may be seen in the aforementioned figure 4, the thrust and insertion mechanism (23) of the rod (22) is conveniently inclined with respect to the support that secures the neck (11) of the preform (1') in the mould (21) in order for said rod (22) to be inserted inside said preform (1') with approximately the same inclination as the body thereof and, therefore, such that, in the blowing phase, it takes place regularly in the inside thereof.

## Claims

1. A method for manufacturing bent-neck bottles, which are manufactured from a plastic material, for example PET (polyethene terephthalate), and comprising a prior injection moulding phase in which a preform (1') is created, consisting of a cylindrical body with an open end with the already defined neck (11) and another closed end, and a subsequent phase in which the preform (1') is located inside a mould (21) where it is stretched via the insertion of a rod (22) and the pre-blowing and/or blowing thereof by blowing pressurised air through the mouth of the preform (1'), **characterised in that,** after the preform (1') creation phase and before the insertion thereof into the mould (21), a phase is included in which said preform (1') is subjected without stretching to a folding process in which an angular offset is carried out between the axis of the neck (11) of the preform (1') and the longitudinal axis of the body (12') thereof.

2. A machine for implementing a method such as the one described in claim 1, comprising at least one mould (21) for the blowing that definitively shapes the bottle and at least one stretching rod (22) connected to an insertion mechanism (23) for the insertion thereof into the preform (1') once placed in the aforementioned mould (21) and through which pressurised air is blown, **characterised in that** it also incorporates a pre-mould (24) to receive the preform (1') in which a folding mechanism is included that carries out an angular offset between the axis of the neck (11) and the body (12') of said preform (1') without stretching the length of the preform.

3. The machine, according to claim 2, **characterised in that** said folding mechanism is a thermal and mechanical system that, having fastening means in order to fasten the neck (11) of the preform (1'), heats a portion close to the same and, via another mechanical rotation element, moves the body (12') of the preform secured to another element of the pre-mould, inclining it until the expected and desired angle has been reached.

## Patentansprüche

1. Verfahren zur Herstellung von Flaschen mit gebogenem Hals, die aus einem Kunststoffwerkstoff, zum Beispiel PET (Polyäthylenterephthalat), hergestellt sind, und welches eine vorausgehende Spritzgießphase, in der ein Vorformling (1') erstellt wird, der aus einem zylindrischen Körper mit einem offenen Ende mit dem bereits definierten Hals (11) und einem anderen geschlossenen Ende besteht, und eine nachfolgende Phase umfasst, in der sich der Vorformling (1') innerhalb eines Formwerkzeugs (21) befindet, in das er durch Einführen einer Stange (22) und das Vorblasen und/oder Blasen davon durch Blasen von Druckluft durch die Öffnung des Vorformlings (1') gestreckt wird, **dadurch gekennzeichnet, dass** nach der Erstellungsphase des Vorformlings (1') und vor Einführen davon in das Formwerkzeug (21) eine Phase eingeschlossen wird, in welcher der Vorformling (1') ohne Streckung einem Biegevorgang unterzogen wird, in dem ein Winkelversatz zwischen der Achse des Halses (11) des Vorformlings (1') und der Längsachse des Körpers (12') davon durchgeführt wird.

2. Maschine zum Durchführen eines Verfahrens, wie desjenigen, das in Anspruch 1 beschrieben ist, umfassend mindestens ein Formwerkzeug (21) für das Blasen, das die Flasche endgültig formt, und mindestens eine Reckstange (22), die mit einem Einführmechanismus (23) zum Einführen davon in den Vorformling (1') nach dem Anordnen in dem vorgenannten Formwerkzeug (21) verbunden ist, und durch den Druckluft geblasen wird, **dadurch gekennzeichnet, dass** sie außerdem eine Vorform (24) zur Aufnahme des Vorformlings (1') umfasst, in der ein Biegemechanismus enthalten ist, der einen Winkelversatz zwischen der Achse des Halses (11) und des Körpers (12') des Vorformlings (F) ausführt, ohne die Länge des Vorformlings zu strecken.

3. Maschine nach Anspruch 2, **dadurch gekennzeichnet, dass** der Biegemechanismus ein thermisches und mechanisches System ist, das Befestigungsmittel enthält, um den Hals (11) des Vorformlings (1') zu befestigen, einen Abschnitt in der Nähe desselben erwärmt und über ein weiteres mechanisches Drehelement den Körper (12') des Vorformlings bewegt, der an einem anderen Element der Vorform befestigt ist, und ihn neigt, bis der erwartete und gewünschte Winkel erreicht worden ist.

## Revendications

1. Procédé de fabrication de bouteilles à col plié, qui sont fabriqués à partir d'un matériau plastique, par exemple du PET (polytéréphtalate d'éthylène), et comprenant une phase préalable de moulage par injection dans laquelle une préforme (1') est créée, consistant en un corps cylindrique avec une extrémité ouverte avec le col déjà défini (11) et une autre extrémité fermée, et une phase ultérieure dans laquelle la préforme (1') est située à l'intérieur d'un moule (21) où elle est étirée par l'insertion d'une tige (22) et le pré-soufflage et/ou soufflage de celle-ci en soufflant de l'air sous pression à travers l'embouchure de la préforme (1'), **caractérisé en ce que,** après la phase de création de la préforme (1') et avant l'insertion de celle-ci dans le moule (21), une phase est incluse dans laquelle ladite préforme (1') est soumise sans étirement à un processus de pliage dans lequel un décalage angulaire est réalisé entre l'axe du col (11) de la préforme (1') et l'axe longitudinal du corps (12') de celle-ci.

2. Machine pour la mise en oeuvre d'un procédé tel que celui décrit dans la revendication 1, comprenant au moins un moule (21) pour le soufflage qui façonne définitivement la bouteille et au moins une tige d'étirement (22) reliée à un mécanisme d'insertion (23) pour l'insertion de celle-ci dans la préforme (1') une fois placée dans le moule susmentionné (21) et à travers laquelle de l'air sous pression est insufflé, **caractérisée en ce qu'**elle incorpore également un pré-moule (24) pour recevoir la préforme (1') dans lequel un mécanisme de pliage est inclus qui réalise un décalage angulaire entre l'axe du col (11) et le corps (12') de ladite préforme (1') sans étirer la longueur de la préforme.

3. Machine, selon la revendication 2, **caractérisée en ce que** ledit mécanisme de pliage est un système thermique et mécanique qui, ayant des moyens de fixation afin de fixer le col (11) de la préforme (1'), chauffe une partie proche de celui-ci et, à travers un autre élément de rotation mécanique, déplace le corps (12') de la préforme rattaché à un autre élément du pré-moule, en l'inclinant jusqu'à ce que l'angle attendu et souhaité soit atteint.
